# EUROPÄISCHE PATENTANMELDUNG

(11) **EP 2 581 206 A1**
(43) Veröffentlichungstag der Anmeldung: **17.04.2013**
(21) Anmeldenummer: 12183274.5
(22) Anmeldetag: 06.09.2012
(51) Int. Cl.: B29D 30/06, B29C 33/02, B29C 33/04, B29C 35/00, B29C 35/02, B29C 35/04

(54) **Vorrichtung zur Vulkanisation eines Fahrzeugreifens mit einer Heizform**

(30) Priorität: 14.10.2011 DE 102011054487
(71) Anmelder: Continental Reifen Deutschland GmbH, 30165 Hannover (DE)
(72) Erfinder: Hackbarth, Rolf, 30926 Seelze (DE); Hesse Heiko, 30900 Wedemark (DE); Ramm, Michael, 30827 Garbsen (DE)
(74) Vertreter: Finger, Karsten

(57) **Zusammenfassung**

Die Erfindung betrifft eine Vorrichtung zur Vulkanisation eines Fahrzeugreifens mit einer Heizform.

Um eine Vorrichtung zur Vulkanisation eines Fahrzeugreifens zu schaffen, bei dem Fahrzeugreifen mit einer hohen Produktqualität erzeugt werden, wird vorgeschlagen, dass die dem Laufstreifen (17) des Fahrzeugreifens (21) zugeordneten Container-Segmente (4, 5) eine erste steuerbare Temperaturversorgungen und Temperaturregelung aufweist und die den Seitenwänden (18, 19) des Fahrzeugreifens (21) zugeordneten Container-Segmente eine zweite steuerbare Temperaturversorgungen und Temperaturregelung aufweist, wodurch eine entkoppelte Temperaturregelung der unterschiedlichen Container-Segmente zur Vulkanisation von Laufstreifen (17) und Seitenwänden (18, 19) des Fahrzeugreifens (21) erfolgt.

## Beschreibung

Die Erfindung betrifft eine Vorrichtung zur Vulkanisation eines Fahrzeugreifens mit einer Heizform.

Die Reifenvulkanisation erfolgt in Heizpressen, bei der der Reifenrohling in geeignete Formsegmente eingesetzt und unter Einwirkung von Wärme sowie Druck vulkanisiert wird. Auf der Reifeninnenseite wird ein flexibler Balg an den Reifen angelegt, der mit einem Heizmedium beaufschlagt wird und auf diese Weise dem Reifenrohling von der Innenseite die notwendige Vulkanisationsenergie zuführt. Die Zuführung der Vulkanisationsenergie über die Reifeninnenseite wird als Innenheizung bezeichnet. Die erforderlichen Vulkanisationstemperaturen und die Vulkanisationsdauer sind von verschiedenen Parametern abhängig, z.B. von dem Reifentyp. Von außen wird der Reifenrohling über an der Form anliegende Heizplatten beheizt.

Bei ungünstigen Vulkanisationsbedingungen kann es zu einem Temperaturverlust im Bereich des Laufstreifens kommen. Dieser Wärmeverlust wird im Allgemeinen durch einen zusätzlichen Energieeintrag kompensiert, der wiederum zu einer erhöhten Wärmebelastung der Reifenwülste führen kann. Diese Situation führt ggfs. zu ungünstigen Vernetzungszuständen an den Reifenwülsten, die die Reifenhaltbarkeit beeinträchtigen können. Um diesen Problem entgegen zu wirken, wird im Allgemeinen auf einem niedrigen Temperaturniveau geheizt. Das niedrige Temperaturniveau kann den Nachteil zur Folge haben, dass die Heizzeit relativ lange ist.

Der Erfindung liegt die Aufgabe zu Grunde, eine Vorrichtung zur Vulkanisation eines Fahrzeugreifens zu schaffen, bei dem der Fahrzeugreifen mit einer hohen Produktqualität erzeugt wird. Außerdem soll die Heizzeit zur Vulkanisation der Fahrzeugreifen insgesamt verkürzt werden.

Gelöst wird die Aufgabe gemäß Anspruch 1 durch eine Vorrichtung gemäß dem Oberbegriff und den kennzeichnenden Merkmalen von Anspruch 1 dadurch, dass die dem Laufstreifen des Fahrzeugreifens zugeordneten Container-Segmente eine erste steuerbare Temperaturversorgungen und Temperaturregelung aufweist und die den Seitenwänden des Fahrzeugreifens zugeordneten Container-Segmente eine zweite steuerbare Temperaturversorgungen und Temperaturregelung aufweist, wodurch eine entkoppelte Temperaturregelung der unterschiedlichen Container-Segmente zur Vulkanisation von Laufstreifen und Seitenwänden des Fahrzeugreifens erfolgt.

Ein Vorteil der Erfindung besteht darin, dass insbesondere durch die entkoppelte Temperaturregelung der unterschiedlichen Containersegmente, die Produktqualität und insbesondere die Reifenhaltbarkeit verbessert werden kann. Der Laufstreifen und die Seitenwände des zu vulkanisierenden Fahrzeugreifens können nunmehr mit unterschiedlichen Temperaturbereichen und unterschiedlichen Temperaturverläufen separat beheizt werden. Die Reifenwülste und Seitenwände werden dazu im Allgemeinen mit einem niedrigen Temperaturniveau beheizt, wohingegen der Laufstreifenbereich bei einem höheren Temperaturbereich beheizt wird.

Ein weiterer Vorteil besteht darin, dass durch diese konstruktive Ausgestaltung eine Heizzeitreduzierung erfolgt. Die erfindungsgemäße Heizpresse hat somit insgesamt den Vorteil, dass Fahrzeugreifen mit einer hohen Produktqualität hergestellt werden.

In einer vorteilhaften Weiterbildung der Erfindung ist vorgesehen, dass der Laufstreifen des Fahrzeugreifens über mindestens zwei in den Container-Segmente angeordnete Wärmeübertragungsmittel beheizt wird,
wobei eines der Wärmeübertragungsmittel in der Bodenplatte des Containers angeordnet ist und das zweite Wärmeübertragungsmittel im Konusring des Containers angeordnet ist.

Auf diese Weise kann der Laufstreifen effektiv mit einer ausreichenden Wärmeenergie beheizt werden, um dadurch die Heizzeit insgesamt zu optimieren.

In einer vorteilhaften Weiterbildung der Erfindung ist vorgesehen, dass das Heizmedium Sattdampf oder Wärme in Form von elektrischer Energie ist.

Dadurch lassen sich die Container-Segmente relativ schnell aufheizen. Bei einer elektrischen Erwärmung werden z.B. elektrische Heizdrähte in den Container-Segmenten angeordnet.

In einer vorteilhaften Weiterbildung der Erfindung ist vorgesehen, dass das Heizmedium Sattdampf ist und die Wärmeübertragungsmittel Dampfkammern sind.

Mit Sattdampf lassen sich die entsprechenden Dampfkammern schnell erhitzen.

In einer vorteilhaften Weiterbildung der Erfindung ist vorgesehen, dass die Dampfkammern zur Beheizung des Laufstreifens nacheinander in Reihe über Dampfleitungen verbunden sind.

Dadurch lässt sich die Beheizung der Dampfkammer in der Bodenplatte einfach realisieren.

In einer vorteilhaften Weiterbildung der Erfindung ist vorgesehen, dass die Dampfkammern zur Beheizung des Laufstreifens mit einer Sattdampf-Temperatur größer als 150°C, vorzugsweise mit einer Temperatur von ca. 154 bis 160°C, beheizt werden. Dadurch lässt sich der Laufstreifenbereich des Fahrzeugreifens mit einer optimierten Heizzeit vulkanisieren.

In einer vorteilhaften Weiterbildung der Erfindung ist vorgesehen, dass die Dampfkammern zur Beheizung der Seitenwände des Fahrzeugreifens mit einem Sattdampf-Temperatur kleiner als 150°C, vorzugsweise mit einer Temperatur von ca. 149°C, beheizt werden.

Dadurch wird eine Überhitzung der Seitenwände und der Reifenwülste des Fahrzeugreifens vermieden.

Anhand eines Ausführungsbeispiels soll die Erfindung näher erläutert werden. Es zeigt:

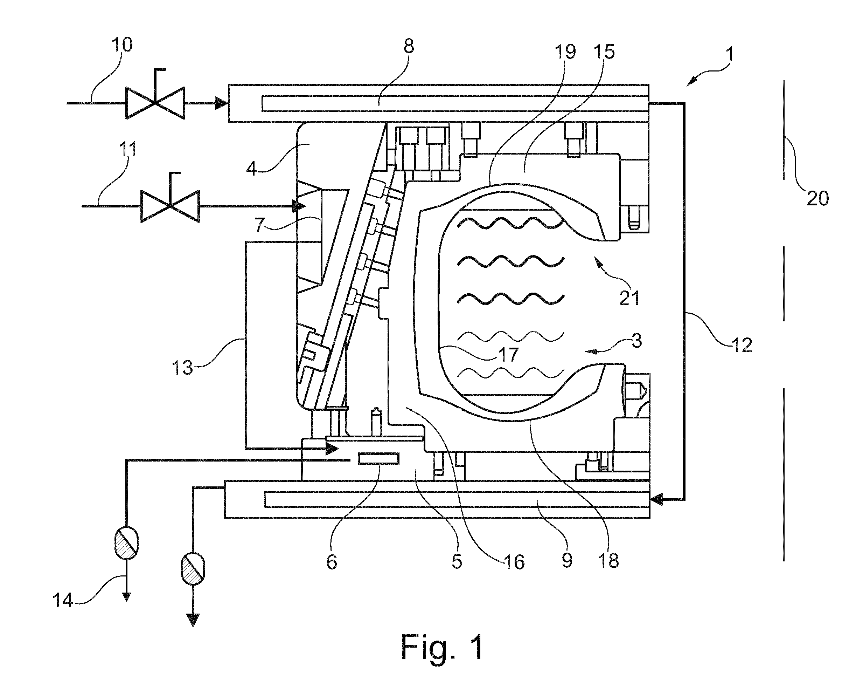

- Fig. 1: die Heizform.

Die Figur 1 zeigt Teile der erfindungsgemäßen Heizform 1. In der Heizform 1 ist der zu vulkanisierende Fahrzeugreifen 21 angeordnet. Alle Bauteile der Heizform 1 sind im Wesentlichen rotationssymmetrisch, wobei diese Figur eine Schnittdarstellung zeigt. Die Bauteile sind im Wesentlichen rotationssymmetrisch um die Rotationssymmetrieachse 20 angeordnet.

Die Beheizung der Reifeninnenseite des Fahrzeugreifens 21 erfolgt über die Innenheizung 3 mit einem Vulkanisationsbalg. Die Außenheizung umfasst die obere Dampfkammer 8 bzw. Segmentheizung zur Beheizung der Seitenwand 19, die untere Dampfkammer 9 zur Beheizung der Seitenwand 22 sowie die Dampfkammer 6 in der Bodenplatte 5 und die Dampfkammer 7 im Konusring 4. Bei diesem Ausführungsbeispiel erfolgt die Beheizung der Dampfkammern mit einem Sattdampf, der über die Zuleitungen 10 und 11 zugeführt wird. Über die Zufuhr 10 wird Sattdampf für die Beheizung der oberen Dampfkammer 8 und der unteren Dampfkammer 9 zugeführt. Der entsprechende Wärmeübergang erfolgt über die dargestellten Container-Segmente und die Seitenschalen 15, die direkt die Seitenwände 19 und 18 beheizen. Die Beheizung des Laufstreifens 17 erfolgt über die Dampfkammer 7 und die Dampfkammer 6, die die Profilsegmente 16 mit Wärmeenergie versorgen. Über die Profilsegmente 16 wird der Laufstreifen 17 beheizt. Die Dampfkammer 7 im Konusring 4 ist über eine Dampfleitung 13 mit der Dampfkammer 6 in der Bodenplatte verbunden. Über die Ableitung 14 wird das Heizmedium wieder abgeführt.

Durch die Dampfkammer 6 wird der Laufstreifen 7 optimal mit Wärmeenergie versorgt. Über die Zufuhr 11 wird ein Sattdampf zugeführt, der ein höheres Temperaturniveau aufweist als der Sattdampf, der über die Zufuhr 10 den Dampfkammern 8 und 9 zugeführt wird. Dadurch kann der Laufstreifenbereich mit einem höheren Temperaturniveau beheizt werden.

Der Sattdampf zur Beheizung der Dampfkammern 6 und 7 sollte ein Temperaturniveau von 155°C bis 160°C aufweisen, sofern mit der Heizform Fahrzeugreifen für Nutzfahrzeuge vulkanisiert werden sollen. Das Temperaturniveau zur Beheizung der Dampfkammern 8 und 9 sollte hingegen eine Temperatur unterhalb von 150°C aufweisen. Dadurch wird sichergestellt, dass die Seitenwände und die Reifenwülste nicht überheizt werden.

Beide Temperaturbereiche werden separat eingestellt und geregelt.

### Bezugszeichenliste (ist Teil der Beschreibung)

- 1: Container
- 2: Fahrzeugreifen
- 3: Innenheizung
- 4: Konusring des Containers
- 5: Bodenplatte des Containers
- 6: Dampfkammer in der Bodenplatte
- 7: Dampfkammer im Konusring
- 8: obere Dampfkammer bzw. Segmentheizung zur Beheizung der Seitenwände des Fahrzeugreifen in einem oberen Container-Segment
- 9: untere Dampfkammer bzw. Segmentheizung zur Beheizung der Seitenwände des Fahrzeugreifen in einem unteren Container-Segment
- 10: Zufuhr von Sattdampf
- 11: Zufuhr von Sattdampf
- 12: Dampfleitung
- 13: Dampfleitung
- 14: Ableitung des Heizmediums
- 15: Seitenschalen
- 16: Profilsegmente
- 17: Laufstreifen des Fahrzeugreifens
- 18: Seitenwand des Fahrzeugreifens
- 19: Seitenwand des Fahrzeugreifens
- 20: Rotationsachse
- 21: Fahrzeugreifen

## Patentansprüche

1. Vorrichtung zur Vulkanisation eines Fahrzeugreifens (21) mit einer Heizform (1), wobei die Heizform (21) eine Vielzahl von Vulkanisationssegmenten in Form von Seitenschalen (15) sowie Profilsegmenten (16) und einen Container umfasst,
und über eine Außenheizung mit einem Heizmedium zumindestens ein Teil der Container-Segmente beheizt werden,
wobei über die Container-Segmente die Reifenaußenseite des Fahrzeugreifens (21) beheizt wird,
wobei ein erster Teil der Container-Segmente dem Laufstreifen (17) des zu vulkanisierenden Fahrzeugreifen (21) zugeordnet ist und ein zweiter Teil der Container-Segmente den Seitenwänden (18, 19) des zu vulkanisierenden Fahrzeugreifen (21) zugeordnet sind,
wobei dem Fahrzeugreifen (21) von der Innenseite über eine Innenheizung (3) Vulkanisationsenergie zugeführt wird,
**dadurch gekennzeichnet, dass**
die dem Laufstreifen (17) des Fahrzeugreifens (21) zugeordneten Container-Segmente (4, 5) eine erste steuerbare Temperaturversorgungen und Temperaturregelung aufweist und die den Seitenwänden (18, 19) des Fahrzeugreifens (21) zugeordneten Container-Segmente eine zweite steuerbare Temperaturversorgungen und Temperaturregelung aufweist,
wodurch eine entkoppelte Temperaturregelung der unterschiedlichen Container-Segmente zur Vulkanisation von Laufstreifen (17) und Seitenwänden (18, 19) des Fahrzeugreifens (21) erfolgt.

2. Vorrichtung nach Anspruch 1,
**dadurch gekennzeichnet, dass**
der Laufstreifen (17) des Fahrzeugreifens (21) über mindestens zwei in den Container-Segmenten (4, 6) angeordnete Wärmeübertragungsmittel (6, 7) beheizt wird, wobei eines der Wärmeübertragungsmittel (7) in der Bodenplatte des Containers angeordnet ist und das zweite Wärmeübertragungsmittel (6, 7) im Konusring des Containers angeordnet ist.

3. Vorrichtung nach einem der vorhergehenden Ansprüche,
**dadurch gekennzeichnet, dass**
das Heizmedium Sattdampf oder Wärme in Form von elektrischer Energie ist.

4. Vorrichtung nach einem der vorhergehenden Ansprüche,
**dadurch gekennzeichnet, dass**
das Heizmedium Sattdampf ist und die Wärmeübertragungsmittel Dampfkammern (6, 7, 8, 9 ) sind.

5. Vorrichtung nach einem der vorhergehenden Ansprüche,
**dadurch gekennzeichnet, dass**
die Dampfkammern (6, 7) zur Beheizung des Laufstreifens (17) nacheinander in Reihe über Dampfleitungen (13) verbunden sind.

6. Vorrichtung nach einem der vorhergehenden Ansprüche,
**dadurch gekennzeichnet, dass**
die Dampfkammern (6, 7) zur Beheizung des Laufstreifens (17) mit einem Sattdampf-Temperatur größer als 150°C, vorzugsweise mit einer Temperatur von ca. 154 bis 160°C, beheizt werden.

7. Vorrichtung nach einem der vorhergehenden Ansprüche,
**dadurch gekennzeichnet, dass**
die Dampfkammern (8, 9) zur Beheizung der Seitenwände (18, 19) des Fahrzeugreifens (21) mit einem Sattdampf-Temperatur kleiner als 150°C, vorzugsweise mit einer Temperatur von ca. 149°C, beheizt werden.
